# EUROPÄISCHE PATENTSCHRIFT

(11) **EP 3 461 869 B1**
(45) Veröffentlichungstag und Bekanntmachung des Hinweises auf die Patenterteilung: **22.04.2020**
(21) Anmeldenummer: 17194226.1
(22) Anmeldetag: 29.09.2017
(51) Int. Cl.: C09D 13/00

(54) **FARBMINE ODER FARBKREIDE, STIFT MIT EINER FARBMINE SOWIE VERFAHREN ZUR HERSTELLUNG EINER FARBMINE ODER FARBKREIDE**
COLOURED LEAD OR COLOURED CHALK, PENCIL WITH A COLOURED LEAD AND METHOD FOR PRODUCING A COLOURED LEAD OR COLOURED CHALK
MINE DE COULEUR OU CRAIE DE COULEUR, CRAYON POURVU D'UNE MINE DE COULEUR AINSI QUE PROCÉDÉ DE FABRICATION D'UNE MINE DE COULEUR OU D'UNE CRAIE DE COULEUR

(43) Veröffentlichungstag der Anmeldung: 03.04.2019
(73) Patentinhaber: Faber- Castell AG, 90546 Stein (DE)
(72) Erfinder: Lugert, Gerhard, 90431 Nürnberg (DE); Appel, Reiner, 90522 Oberasbach (DE); Barroso, Vladimir, 13561-358 Sao Carlos (BR); Merola, Eder D. J., 13560-340 Sao Carlos (BR); Atassio, Marcel Prado, 13566-060 Sao Carlos (BR)
(74) Vertreter: Schlögl, Markus

(56) Entgegenhaltungen:
- EP-A1- 0 697 447
- DE-A1- 19 611 985
- JP-A- 2002 265 846
- JP-A- 2002 302 633
- JP-A- 2015 227 426
- US-A1- 2003 000 420

## Beschreibung

Die Erfindung betrifft eine Farbmine, insbesondere eine radierbare, gesinterte Farbmine für Schreib-, Zeichen- oder Malgeräte oder eine Farbkreide, insbesondere eine radierbare, gesinterte Farbkreide, einen Stift mit einer Farbmine sowie ein Verfahren zur Herstellung einer Farbmine oder Farbkreide.

Um eine Radierbarkeit bei Farbminen oder Farbkreiden zu erreichen, ist es beispielsweise bekannt, mit der jeweiligen Minenfarbe eingefärbte Kunststoffpartikel in die Farbmine bzw. Farbkreide zu integrieren, die dann beim Erzeugen eines Abstriches derart an der Papieroberfläche haften, dass sie mit einem Radiergummi wieder entfernbar sind. Aus der EP 3 112 430 A1 ist beispielsweise eine Farbmine bekannt, die ein Harz enthält, in welchem ein Farbstoff gelöst oder eingeschlossen ist.

Die EP 1 624 036 B1 beschreibt ungebrannte Farbminen, bei denen Alginate als Bindemittel enthalten sind, die weniger stark an der Papieroberfläche haften als andere Bindemittel und dadurch die Radierbarkeit des Abstriches verbessern. Zur Herstellung dieser Farbminen werden alle Ausgangsstoffe vermischt, zur Minensträngen extrudiert und anschließend bei Temperaturen zwischen 60 und 120°C getrocknet. Mit solchen Farbminen erzeugte Abstriche sind jedoch wenig farbintensiv. Zudem ist auch eine weitere Verbesserung der Radierbarkeit der Abstriche wünschenswert.

Es ist Aufgabe der Erfindung, eine Farbmine oder Farbkreide vorzuschlagen, die eine hohe Farbintensität, insbesondere bei guter Radierbarkeit zeigt. Ferner ist es Aufgabe der Erfindung ein Verfahren zur Herstellung einer Farbmine oder Farbkreide sowie einen Stift mit einer Farbmine anzugeben.

Die erstgenannte Aufgabe wird gelöst mit einer Farbmine für Schreib-, Zeichen- und Malgeräte, insbesondere einer radierbaren, gesinterten Farbmine oder einer Farbkreide, insbesondere einer radierbaren, gesinterten Farbkreide mit den Merkmalen gemäß Anspruch 1. Die Farbmine oder Farbkreide umfasst einen gesinterten Minen- oder Kreidengrundkörper, der aus einer Minen- oder Kreidengrundmasse enthaltend mindestens ein Bindemittel mit einem Anteil von 1 bis 25 Gew.-% und mindestens einen Füllstoff mit einem Anteil von 25 bis 99 Gew.-% gebildet ist. Der gesinterte Minen- oder Kreidengrundkörper ist mit mindestens einem Farbmittel sowie mindestens einem Gleitmittel bzw. einem fett- oder wachsartiger Stoff imprägniert bzw. das Farbmittel und das Gleitmittel sind in den gesinterten Minen- oder Kreidengrundkörper eingebracht bzw. eingebettet, wobei der gesinterte Minen- oder Kreidengrundkörper nacheinander mit dem Farbmittel und dem Gleitmittel imprägniert wird. Hierzu wird das Farbmittel in einem Lösemittel gelöst.

Die angegebenen Anteile des Bindemittels und des Füllstoffes sind dabei bezogen auf die in der Minen- oder Kreidengrundmasse enthaltenen Anteile, geben also die Anteile der zur Herstellung des gesinterten Minen- oder Kreidengrundkörpers eingesetzten Ausgangsstoffe wieder und entsprechen somit den Anteilen in dem ungesinterten Minen- oder Kreidengrundkörper.

Die Zusammensetzung der Ausgangsstoffe für den gesinterten Minen- oder Kreidengrundkörper der erfindungsgemäßen Farbminen oder Farbkreiden kann somit wie folgt angegeben werden:

| | |
|---|---|
| Bindemittel | 1 bis 25 Gew.-% |
| Füllstoff(e) | 25 bis 99 Gew.-% |

Die Farbmine oder Farbkreide wird also dadurch erhalten, dass aus einer Minen- bzw. Kreidengrundmasse, enthaltend zumindest den Füllstoff und das Bindemittel, ein gesinterter Minen- oder Kreidengrundkörper hergestellt wird, der eine poröse Struktur aufweist. Dies erfolgt im Wesentlichen durch Mischen der Ausgangsstoffe, Extrusion der Minen- bzw. Kreidengrundmasse zu Minen- oder Kreidensträngen, Trocknen und Sintern der extrudierten Minen- oder Kreidenstränge. In die Poren des Minen- oder Kreidengrundkörpers werden nachfolgend in getrennten Schritten das Farbmittel und das Gleitmittel durch Imprägnieren eingebracht, insbesondere durch Eintauchen des gesinterten Minen- oder Kreidengrundkörpers in das Imprägniermittel, also das Farbmittel oder das Gleitmittel bzw. diese jeweils enthaltende Lösungen. Das Farbmittel und das Gleitmittel werden somit erst nachträglich in den bereits gesinterten Minen- oder Kreidengrundkörper eingebracht, wodurch eine Schädigung des Farbmittels und des Gleitmittels durch die hohen Temperaturen während des Sinterprozesses verhindert wird und die Herstellung einer gebrannten Farbmine ermöglicht wird.

Die vorliegende Farbmine oder Farbkreide bietet dabei zusätzlich den Vorteil, dass zunächst ein einheitlicher, gesinterter Grundkörper der Farbmine oder Farbkreide bereitgestellt wird. Durch Auswahl des Farbmittels und des Gleitmittels lässt sich anschließend das Eigenschaftsprofil der Farbmine oder Farbkreide anpassen. Im einfachsten Fall kann hier die Farbe der Farbminen oder Farbkreiden variiert werden, sodass verschiedenfarbige Farbminen aus denselben Grundkörpern erzeugt werden können. Dadurch wird der Aufwand bei der Herstellung der Farbminen deutlich reduziert, da lediglich verschiedene Zusammensetzungen an Imprägniermitteln bereitgestellt werden müssen, die Herstellung des Grundkörpers jedoch einheitlich erfolgen kann. Die Farbminen oder Farbkreiden sind zum Schreiben, Zeichnen und Malen auf weißem, schwarzem sowie farbigem Papier geeignet.

Im Folgenden wird vereinfachend vorwiegend auf eine Farbmine Bezug genommen, die Ausführungen gelten jedoch ebenso auch für eine Farbkreide.

Vorzugsweise sind als Füllstoffe Bornitrid und/oder ein mineralischer Füllstoff, insbesondere Kaolin und/oder Talkum und/oder Calciumcarbonat und/oder Bimsmehl, und/oder Ton in der Minen- oder Kreidengrundmasse enthalten.

Bornitrid weist in einer seiner Modifikationen ("α-Bornitrid") eine hexagonale Kristallstruktur auf, die strukturell mit Graphit vergleichbar ist. Durch Zugabe von Bornitrid als Füllstoff kann die Radierbarkeit positiv beeinflusst werden, was möglicherweise darauf zurückzuführen ist, dass Bornitrid aufgrund seiner schichtartigen Struktur einen schichtförmigen Abstrich erzeugt, der ein tiefes Eindringen der Farbmittel in die Schreib- oder Zeichenunterlage verhindert oder zumindest verringert. Es konnte also festgestellt werden, dass die gesinterten Farbminen oder Farbkreiden, welche Bornitrid als Füllstoff enthalten, mit herkömmlichen gebrannten Graphitminen mit Härtegrad B vergleichbare Eigenschaften im Hinblick auf Abstrichverhalten, Radierbarkeit, Spitzbarkeit, Abriebfestigkeit sowie Bruchfestigkeit aufweisen.

Eine gute Radierbarkeit lässt sich insbesondere dann erreichen, wenn Bornitrid als Füllstoff mit einem Anteil von maximal 90 Gew.-%, insbesondere mit einem Anteil von maximal 82 Gew.-%, besonders bevorzugt mit einem Anteil von maximal 75 Gew.-% in der Minen- oder Kreidengrundmasse enthalten ist. Über den Gehalt an Bornitrid lassen sich zudem insbesondere auch die mechanische Festigkeit sowie die Weichheit der Farbmine einstellen. Je höher der Anteil an Bornitrid, desto weicher wird die Mine.

Der mineralische Füllstoff ist vorteilhafterweise mit einem Anteil von maximal 90 Gew.-%, insbesondere mit einem Anteil von maximal 82 Gew.-%, besonders bevorzugt mit einem Anteil von maximal 75 Gew.-% in der Minen- oder Kreidengrundmasse enthalten.

Der Ton ist vorzugsweise mit einem Anteil von 1 bis 60 Gew.-%, insbesondere mit einem Anteil von 1 bis 50 Gew.-%, besonders bevorzugt mit einem Anteil von 1 bis 45 Gew.-% in der Minen- oder Kreidengrundmasse enthalten. Durch den mineralischen Füllstoff sowie den Ton, lassen sich die mechanische Festigkeit und Härte der Mine bei weiterhin ausreichender Farbintensität und guter Radierbarkeit weiter erhöhen bzw. stabilisieren. Zudem lassen sich durch den Einsatz dieser Füllstoffe Kosten reduzieren.

Die Farbmine, genauer die Minen- oder Kreidengrundmasse enthält vorzugsweise insgesamt mindestens 50 Gew.-% an Füllstoffen. Insbesondere sind insgesamt Füllstoffe mit einem Anteil von mindestens 65 Gew.-%, besonders bevorzugt mit einem Anteil von mindestens 80 Gew.-% in der Minen- oder Kreidengrundmasse enthalten.

Das mindestens eine Bindemittel ist in der Minen- oder Kreidengrundmasse insbesondere mit einem Anteil von 3 bis 20 Gew.-%, besonders bevorzugt mit einem Anteil von 4 bis 17 Gew.-% enthalten. Als Bindemittel kommen organische Materialien, beispielsweise Cellulose oder Cellulosederivate, Alginate oder auch Polyvinylalkohole in Frage. Durch das Bindemittel lassen sich unter anderem eine bessere Bearbeitbarkeit der Minen- oder Kreidengrundmasse sowie eine bessere Ausformung der Minen- oder Kreidengrundkörper erreichen. Durch den Gehalt an Bindemittel kann insbesondere die mechanische Festigkeit der Rohminen bzw. der aus der Minengrundmasse gebildeten Minengrundkörper vor dem Sintervorgang gewährleistet werden. In den gesinterten Minengrundkörpern ist das Bindemittel nicht oder kaum mehr vorhanden, da dies durch die hohen Temperaturen während des Sinterprozesses nahezu vollständig zersetzt wird. Ferner lässt sich über das Bindemittel die für den Imprägniervorgang relevante Porosität bzw. eine Größe oder Ausdehnung der Poren der gesinterten Minengrundkörper einstellen, wobei sich der genannte Anteil als besonders vorteilhaft erwiesen hat.

Zusammenfassend lässt sich als Rezeptur für die Minen- oder Kreidengrundmasse zur Herstellung des gesinterten Minen- oder Kreidengrundkörpers folgende Zusammensetzung angeben:

| | |
|---|---|
| Mineralischer Füllstoff | 0 bis 90 Gew.-% |
| Ton | 1 bis 60 Gew.-% |
| Bornitrid | 0 bis 90 Gew.-% |
| Bindemittel | 1 bis 25 Gew.-% |

Das Farbmittel, also das zumindest eine Farbmittel oder die Summe aller enthaltenen Farbmittel, ist vorzugsweise mit einem Anteil von 0,1 bis 10 Gew.-%, insbesondere mit einem Anteil von 0,5 bis 7 Gew.-%, besonders bevorzugt mit einem Anteil von 0,8 bis 5 Gew.-% in der Farbmine oder Farbkreide enthalten. Der Anteil des Farbmittels ist also vorliegend bezogen auf den in der fertigen Farbmine oder Farbkreide enthaltenen Anteil an Farbmittel. Überraschenderweise wurde festgestellt, dass aufgrund des nachträglichen Einbringens des Farbmittels bereits ein deutlich geringerer Anteil des Farbmittels an der Gesamtmasse der Farbmine ausreichend ist, um einen kräftigen Farbabstrich zu erreichen, der mit dem von bisher bekannten ungebrannten Farbminen vergleichbar ist.

Um neben verschieden farbigen Abstrichen auch unterschiedliche Farbeffekte zu erzeugen, enthält die Farbmine in einer ersten Variante als Farbmittel zumindest einen wasserlöslichen oder alkohollöslichen Farbstoff, insbesondere einen anionischen oder kationischen Farbstoff. Der Farbstoff wird dabei in Wasser oder Alkohol oder einer Mischung aus Wasser und Alkohol gelöst, um die für das Einbringen des Farbmittels in den Minengrundkörper dienende Imprägnierlösung herzustellen, in welche der gesinterte Minengrundkörper dann getaucht wird. Alternativ enthält die Farbmine als Farbmittel zumindest einen öllöslichen Farbstoff oder einen fluoreszierenden Farbstoff.

Enthält die Farbmine wasserlösliche oder alkohollösliche Farbstoffe- nachfolgend auch als wasserlösliche Farbmine bezeichnet - ist der mit einer solchen Farbmine erzeugte Abstrich wasserlöslich. Er lässt sich somit nicht nur mittels eines Radiergummis von der Schreib-, Zeichen- oder Malunterlage wieder entfernen, wie dies bei einem mit einer Graphitmine erzeugten Abstrich der Fall ist, sondern zusätzlich lässt sich auch ein Aquarelleffekt erzeugen, wenn der Abstrich mit Wasser behandelt wird und sich dadurch auf der Unterlage verteilen lässt. Der Auftrag des Wassers kann beispielsweise mit einem Pinsel oder Schwämmchen erfolgen.

Enthält die Farbmine öllösliche Farbstoffe- nachfolgend auch als permanente Farbmine bezeichnet - konnte überraschenderweise festgestellt werden, dass sich der mit einer solchen Farbmine erzeugte Abstrich auf der Schreib-, Zeichen- oder Malunterlage in einen dauerhaften, also permanenten Abstrich umwandeln lässt. Ein erzeugter Abstrich lässt sich auch bei der permanenten Farbmine ohne weitere Behandlung mittels eines Radiergummis von der Schreib-, Zeichen- oder Malunterlage wieder entfernen. Sofern jedoch ein dauerhafter Abstrich erzeugt werden soll, wird dieser nach dem Auftragen auf die Unterlage mit Wasser oder Alkohol behandelt. Dadurch werden die öllöslichen Farbstoffe aus dem Abstrich herausgelöst und dringen tiefer in die Unterlage, genauer in die Papierfasern ein, sodass ein Radieren des Abstriches nicht mehr möglich ist.

Werden fluoreszierende Farbstoffe eingesetzt, lassen sich mit einem Textmarker vergleichbare Abstriche zum Hervorheben von Textteilen oder ähnlichem erzeugen.

Durch Imprägnieren der Farbmine in zumindest einem Gleitmittel wird die Farbmine weicher, sodass das Abstrichverhalten sowie die Radierbarkeit der Mine verbessert werden. Die Zugabe des Gleitmittels erfolgt durch Imprägnieren der gesinterten Minengrundkörper, die Gleitmittel werden also ebenfalls nicht bereits der Minengrundmasse zugegeben. Dadurch tritt der vorstehend beschriebene Effekt bereits zufriedenstellend ein, sofern in der Farbmine oder Farbkreide insgesamt ein Anteil von 1 bis 20 Gew.-%, insbesondere ein Anteil von 3 bis 18 Gew.-%, besonders bevorzugt ein Anteil von 5 bis 16 Gew.-% an Gleitmittel enthalten ist, was wohl wiederum darauf zurückzuführen zu sein scheint, dass das Gleitmittel weniger fest in der Bindemittel-Füllstoff-Matrix eingebettet wird. Der Anteil des Gleitmittels ist vorliegend ebenfalls bezogen auf den in der fertigen Farbmine oder Farbkreide enthaltenen Anteil an Gleitmittel.

Als Gleitmittel ist oder sind vorzugsweise zumindest ein hydrophiles Wachs und/oder zumindest ein hydrophober fett- oder wachsartiger Stoff, insbesondere Triglyceride einer oder mehrerer Fettsäuren, ein Paraffinwachs und/oder ein Polyolefinwachs enthalten. Dabei wird das hydrophile Wachs eingesetzt, um wasserlösliche Farbminen herzustellen und die oben beschriebenen Effekte zu erzielen bzw. zu verstärken. Die weiteren genannten Gleitmittel werden auch bei permanenten Farbminen eingesetzt.

Je nach Bedarf kann die Farbmine zudem weitere, übliche Additive, wie beispielsweise Tenside oder Emulgatoren enthalten, die der Minengrundmasse bei der Herstellung der Farbmine zugefügt werden, um die Verarbeitbarkeit der Ausgangsstoffe zu erleichtern.

Als Zusammensetzung der fertigen Farbmine oder Farbkreide kann somit folgende Zusammensetzung angegeben werden:

| | |
|---|---|
| Gesinterter Minen-/Kreidengrundkörper | 80,0 bis 95,0 Gew.-% |
| Farbmittel | 1,5 bis 4,0 Gew.-% |
| Gleitmittel | 7,0 bis 15,0 Gew.-% |

Die zweitgenannte Aufgabe wird gelöst mit einem Stift mit den Merkmalen gemäß Anspruch 12, welcher eine Farbmine mit den vorstehend beschriebenen Merkmalen umfasst. Der Stift weist dabei insbesondere eine Ummantelung aus Holz oder aus einem Holzersatzwerkstoff ("Wood Plastic Compound") auf, welcher die Farbmine umhüllt. Alternativ ist der Stift ein mechanischer Stift, beispielsweise ein Feinminenstift, der mit einer Farbmine ausgestattet ist.

Die drittgenannte Aufgabe wird gelöst durch ein Verfahren zur Herstellung einer Farbmine oder Farbkreide mit den Merkmalen gemäß Anspruch 13. Gemäß dem Verfahren wird aus einer Minen- oder Kreidengrundmasse enthaltend zumindest ein Bindemittel und einen Füllstoff ein gesinterter Kreiden- oder Minengrundkörper hergestellt (Schritt a)).

Um farbige bzw. farbabgebende Kreiden und/oder Minen zu erhalten, werden die gesinterten Kreiden- oder Minengrundkörper in einem nachfolgenden Schritt in einer zumindest ein Farbmittel enthaltenden Lösung, insbesondere einer wässrigen und/oder einen Alkohol enthaltenden Lösung imprägniert (Schritt b)). Hierzu werden die gesinterten Kreiden- oder Minengrundkörper in die das Farbmittel enthaltende Lösung eingetaucht. Sofern eine wasserlösliche Farbmine hergestellt werden soll, sind als Farbmittel hydrophile Farbstoffe enthalten. Bei der Herstellung einer permanenten Farbmine werden der Lösung als Farbmittel öllösliche Farbstoffe zugegeben. Folgende Prozessparameterbereiche lassen sich für diesen ersten Imprägnierschritt, der typischerweise in einem Autoklaven erfolgt, angeben:

| | |
|---|---|
| Temperatur des Autoklaven | 40 bis 60 °C |
| Druck im Autoklaven | 0 bis 9 kgf/mm² |
| Dauer des Imprägnierens | 1 bis 72 h |

In einem abschließenden Schritt werden die gesinterten, farbigen Kreiden- oder Minengrundkörper, in einer zumindest ein Gleitmittel enthaltenden Lösung imprägniert (Schritt c)). Hierzu werden die gesinterten, farbigen Kreiden- oder Minengrundkörper in die das Gleitmittel enthaltende Lösung eingetaucht. Sofern eine wasserlösliche Farbmine hergestellt werden soll, ist als Gleitmittel zumindest ein hydrophiles Wachs enthalten. Bei der Herstellung einer permanenten Farbmine werden wasserunlösliche Gleitmittel, wie beispielsweise Paraffinwachs, Polyolefinwachs oder Öl zugegeben. Durch den zweiten Imprägnierschritt werden vorwiegend die mechanische Festigkeit sowie die Weichheit der Farbmine verbessert bzw. eingestellt.

Für den zweiten Imprägnierschritt, der ebenfalls typischerweise in einem Autoklaven erfolgt, lassen sich folgende Prozessparameter angeben:

| | |
|---|---|
| Temperatur des Autoklaven | 40 bis 110 °C |
| Druck im Autoklaven | 0 bis 9 kgf/mm² |
| Dauer des Imprägnierens | 1 bis 72 h |

Die Herstellung des gesinterten Kreiden- oder Minengrundkörpers aus der Kreiden- oder Minengrundmasse enthaltend zumindest ein Bindemittel und zumindest einen Füllstoff, sowie zunächst die Herstellung der Kreiden- oder Minengrundmasse an sich umfasst insbesondere mehrere Schritte. In einem ersten Schritt werden die die Kreiden- oder Minengrundmasse bildenden Stoffe, nämlich das zumindest eine Bindemittel und der zumindest eine Füllstoff, gegebenenfalls unter Zugabe von Wasser, zu der Minen- oder Kreidengrundmasse vermischt und homogenisiert (Schritt a1)). Dies erfolgt insbesondere in einem Schnellmischer, wobei sich als grundlegende Prozessparameter für den Mischvorgang folgende Werte angeben lassen:

| | |
|---|---|
| Rotationsgeschwindigkeit | 200 bis 4000 rpm |
| Temperatur | 25 bis 100 °C |
| Mischdauer | 20 bis 80 min |
| Abkühldauer | 10 bis 30 min |

Ferner können Typ und Anordnung des Rührwerkes sowie die Reihenfolge der Zugabe der Ausgangsstoffe variiert werden.

In einem weiteren Schritt wird die Minen- oder Kreidengrundmasse geknetet (Schritt a2)). Dies erfolgt insbesondere in einem Kneter und/oder in einer Walzenmühle. Als grundlegende Prozessparameter für den Knetvorgang in einer Walzenmühle (Doppelwalze) lassen sich folgende Werte angeben:

| | |
|---|---|
| Abstand zwischen Walzen | 0,5 bis 1,0 mm |
| Anzahl der Durchläufe | 2 bis 4 |

Ferner kann die Relativgeschwindigkeit zwischen den Rollen variiert werden. Gegebenenfalls wird auch hier Wasser zugegeben.

Nachfolgend wird die Minen- oder Kreidengrundmasse, beispielsweise in Form eines Granulates oder eines pastenförmigen Materials, zu Kreiden und/oder Minensträngen extrudiert (Schritt a3)). Als grundlegender Prozessparameter für den Extrusionsvorgang lässt sich eine Extrusionsgeschwindigkeit von 15 bis 150 m/min angeben. Diese ist abhängig von dem gewünschten Durchmesser der Farbmine oder Farbkreide, wobei der Durchmesser einer Farbmine typischerweise zwischen 0,3 und 6,0 mm betragen soll, der Durchmesser einer Farbkreide liegt üblicherweise zwischen 6 und 12 mm. Abhängig von dem Wassergehalt der Minen- oder Kreidengrundmasse kann ferner bei unterschiedlichen Drücken gearbeitet werden.

In einem weiteren Schritt werden die extrudierten Kreiden und/oder Minenstränge bei Temperaturen zwischen 80 und 150 °C und einer Dauer zwischen 250 und 300 min getrocknet, um insbesondere das zuvor zugegebene und in den extrudierten Kreiden und/oder Minensträngen vorhandene Wasser zu entfernen (Schritt a4)).

Anschließend werden die getrockneten Kreiden und/oder Minenstränge in nicht-oxidativer Atmosphäre gesintert, um die Kreiden und/oder Minenstränge zu festigen (Schritt a5)). Als ideal hat sich hierbei eine maximale Temperatur bzw. Endtemperatur zwischen 600 und 1100 °C bei einer Heizrate von 5 bis 50 °C/min erwiesen. Nach dem Sinterprozess ist somit der Kreiden- oder Minengrundkörper der Farbmine oder Farbkreide gebildet. Durch die Temperatur während des Sintervorgangs kann das Eigenschaftsprofil der Farbminen wesentlich beeinflusst werden. Es hat sich gezeigt, dass eine hohe Temperatur zu dichten, also wenig porösen und harten Farbminen führt, deren Abstrich jedoch eine geringe Farbintensität aufweist. Je niedriger hingegen die Temperatur, desto poröser, zerbrechlicher wird die Farbmine, aber desto farbintensiver deren Abstrich. In dem vorstehend genannten Temperaturintervall wurden Festigkeit, Stabilität und Abstrichverhalten die besten Ergebnisse erzielt.

In der Lösung ist das Farbmittel vorzugsweise mit einem Anteil von 1 bis 30 Gew.-%, insbesondere mit einem Anteil von 3 bis 26 Gew.-%, besonders bevorzugt mit einem Anteil von 5 bis 22 Gew.-% enthalten.

Vorzugsweise wird ein ach dem Imprägnieren (Schritte b) und c)) in den Kreiden und/oder den Minensträngen vorhandenes überschüssiges Lösungsmittel, insbesondere Wasser oder Alkohol, jeweils mittels Zentrifugieren entfernt, sodass die hergestellte Farbmine kein Lösungsmittel, also insbesondere kein Wasser und keinen Alkohol mehr enthält. Dabei hat sich für das Zentrifugieren jeweils eine Dauer von etwa 15 min als ausreichend erwiesen.

In nachfolgender Tabelle 1 sind verschiedene Zusammensetzungen aufgeführt, die als Ausgangsstoffe zur Herstellung der Minengrundmasse eingesetzt werden, nämlich verschiedene Füllstoffe, mineralische Füllstoffe, Ton oder Bornitrid sowie ein Bindemittel.

**Tabelle 1:**

| | **Ausführungsbeispiele** | | | | | | | |
|---|---|---|---|---|---|---|---|---|
| | **1** | **2** | **3** | **4** | **5** | **6** | **7** | **8** |
| Mineralischer Füllstoff¹⁾ | 0,0 | 6,0 | 12,0 | 25,0 | 45,0 | 27,0 | 70,0 | 42,0 |
| Ton²⁾ | 21,0 | 17,0 | 42,0 | 27,0 | 4,0 | 38,0 | 16,0 | 4,0 |
| Bornitrid³⁾ | 65,0 | 71,0 | 34,0 | 36,0 | 46,0 | 20,0 | 0,0 | 46,0 |
| Bindemittel⁴⁾ | 14,0 | 6,0 | 12,0 | 12,0 | 5,0 | 15,0 | 14,0 | 8,0 |
| Summe: | 100,0 | 100,0 | 100,0 | 100,0 | 100,0 | 100,0 | 100,0 | 100,0 |

Die Angaben sind in Gewichtsprozent und geben jeweils den Anteil der einzelnen Stoffe in der Minengrundmasse an.

In nachfolgender Tabelle 2 sind Ausführungsbeispiele für Imprägnierlösungen zum Einbringen des Farbmittels in den gesinterten Minengrundkörper aufgeführt, die zum Erzeugen verschieden farbiger Minen eingesetzt werden.

**Tabelle 2:**

| | **Blaue Farbmine** | **Rote Farbmine** | **Grüne Farbmine** | **Pinke Farbmine** | **Gelbe Farbmine** |
|---|---|---|---|---|---|
| Basic blue 007⁵⁾ | 12,3 | | | | |
| Basic yellow 037⁶⁾ | | 6,2 | 5,8 | | 14,8 |
| Basic red 1:1⁷⁾ | | 15,3 | | | |
| Basic green 4/42000⁸⁾ | | | 15,7 | | |
| Basic red 1⁹⁾ | | | | 21,5 | |
| Lösungsmittel (Alkohol)¹⁰⁾ | 87,7 | 78,5 | 78,5 | 78,5 | 85,2 |
| Summe: | 100,0 | 100,0 | 100,0 | 100,0 | 100,0 |

Die Angaben sind in Gewichtsprozent und geben jeweils den Anteil der einzelnen Stoffe in der Imprägnierlösung an.

Mittels Imprägnierlösungen gemäß Tabelle 2, bei denen kationische bzw. alkohollösliche Farbstoffe eingesetzt werden, lassen sich wasserlösliche Farbminen herstellen. Zur Herstellung permanenter Farbminen werden Imprägnierlösungen enthaltend öllösliche Farbstoffe oder Farbpigmente, z.B. Solvent Red CI 26100, Solvent Blue CI 61554 in ähnlichen Anteilen, eingesetzt.

In Tabelle 3 sind jeweils drei Beispielrezepturen für eine radierbare, wasserlösliche Farbmine sowie für eine radierbare, permanente Farbmine aufgeführt. Die Prozessparameter, die bei der Herstellung der Farbminen A bis F eingestellt wurden, sind Tabelle 4 zu entnehmen. Das Bindemittel und der Füllstoff, vorliegend jeweils Bornitrid sowie ein weiterer Füllstoff, nämlich Ton oder Kaolin, werden zunächst in zwei Stufen in einem Schnellmischer vermischt und homogenisiert und anschließend in einer Walzenmühle geknetet. Die daraus erhaltene Minengrundmasse wird zu Minensträngen extrudiert. Zur Beschleunigung des Vermischungs- bzw. Homogenisierungsprozesses wird Wasser zugegeben und während des Mischvorgangs im Schnellmischer, der Walzenmühle oder in dem Extruder bis auf eine Restfeuchtigkeit von kleiner 2 Gew.-% wieder verdunstet. Die Minenstränge werden nachfolgend getrocknet und gesintert, sodass der gesinterte Minengrundkörper fertig gestellt ist. In zwei abschließenden Imprägniervorgängen werden die gesinterten Minengrundkörper nacheinander in eine das Farbmittel enthaltende Lösung und in eine das Gleitmittel enthaltende Lösung getaucht, sodass das Farbmittel bzw. das Gleitmittel in die Poren des gesinterten Minengrundkörpers eindringen kann.

**Tabelle 3: Beispiele für Farbminen**

| | **Ausführungsbeispiele** | | | | | |
|---|---|---|---|---|---|---|
| | Radierbare, wasserlösliche Farbmine | | | Radierbare, permanente Farbmine | | |
| | **A** | **B** | **C** | **D** | **E** | **F** |
| **Gesinterter Minengrundkörper** (Füllstoffe/Bindemittel) | 86,4 | 83,2 | 89,2 | 85,0 | 88,8 | 93,0 |

| **Minengrundmasse:** | | | | | | |
|---|---|---|---|---|---|---|
| - Ton | 20,5 | 15,2 | 10,2 | 34,0 | 24,5 | 7,0 |
| - Kaolin | 0,0 | 0,0 | 0,0 | 0,0 | 8,0 | 24,7 |
| - Bornitrid | 55,7 | 58,3 | 72,1 | 40,0 | 49,1 | 56,3 |
| - Bindemittel | 10,2 | 9,7 | 6,9 | 11,0 | 7,2 | 5,0 |

| **Farbstoffe:** | | | | | | |
|---|---|---|---|---|---|---|
| - Hydrophiler Farbstoff ^{5), 6), 7), 8), 9)} | 1,6 | 1,2 | 1,0 | 0,0 | 0,0 | 0,0 |
| - Öllöslicher Farbstoff ¹¹⁾ | 0,0 | 0,0 | 0,0 | 2,0 | 1,4 | 1,0 |

| **Gleitmittel:** | | | | | | |
|---|---|---|---|---|---|---|
| - ein oder mehrere hydrophile Wachse ¹²⁾ | 1,0 | 2,0 | 2,0 | 0,0 | 0,0 | 0,0 |
| - ein oder mehrere hydrophobe Wachse ^{13), 14)} | 11,0 | 13,6 | 7,8 | 13,0 | 9,8 | 6,0 |

Die Angaben sind in Gewichtsprozent.

Nach jedem Imprägniervorgang wird in den Imprägnierlösungen eingesetzter Alkohol bzw. Wasser durch Zentrifugieren entfernt. Während der Herstellung verwendetes Wasser sowie in den Imprägnierlösungen vorhandener Alkohol bzw. vorhandenes Wasser ist somit in der fertigen Farbmine nicht bzw. kaum mehr enthalten.

**Tabelle 4: Prozessparameter der Farbminen gemäß der Ausführungsbeispiele A bis F:**

| | **Ausführungsbeispiele** | | | | | |
|---|---|---|---|---|---|---|
| **Prozessparameter** | Radierbare, wasserlösliche Farbmine | | | Radierbare, permanente Farbmine | | |
| | **1** | **2** | **3** | **4** | **5** | **6** |
| **Schnellmischer** | | | | | | |
| Rotationsgeschwindigkeit Stufe 1 [rpm] | 200 - 600 | 200 - 600 | 200 - 600 | 200 - 600 | 200 - 600 | 200 - 600 |
| Rotationsgeschwindigkeit Stufe 2 [rpm] | 3000- - 4000 | 2500 - 3500 | 2500 - 3500 | 3000 - 4000 | 2500 - 3500 | 2500 - 3500 |
| Temperaturbereich Stufe 1 [°C] | 25 - 50 | | | | | |
| Temperaturbereich Stufe 2 [°C] | 50 - 100 | | | | | |
| Mischdauer Stufe 1 [min] | 5 - 10 | | | | | |
| Mischdauer Stufe 2 [min] | 15 - 75 | | | | | |
| Abkühldauer [min] | 10 - 30 | 10 - 30 | 10 - 30 | 10 - 30 | 10 - 30 | 10 - 30 |
| | | | | | | |

| **Mischen in Walzenmühle** | | | | | | |
|---|---|---|---|---|---|---|
| Abstand zwischen Walzen [mm] | 0,5 | 0,5 | 1,0 | 0,5 | 0,5 | 1,0 |
| Anzahl Durchläufe | 4 | 3 | 2 | 4 | 3 | 2 |
| | | | | | | |

| **Extrusion der Minengrundmasse** | | | | | | |
|---|---|---|---|---|---|---|
| Extrusionsgeschwindigkeit [m/min] | 15 - 150 | 15 - 150 | 15 - 150 | 15 - 150 | 15 - 150 | 15 - 150 |
| | | | | | | |

| **Trocknen** | | | | | | |
|---|---|---|---|---|---|---|
| Temperatur [°C] | 150 | 100 | 80 | 150 | 100 | 80 |
| Dauer [min] | 300 | 250 | 250 | 300 | 250 | 250 |
| | | | | | | |

| **Sintern** | | | | | | |
|---|---|---|---|---|---|---|
| Temperatur [°C] | 600 | 800 | 1100 | 750 | 850 | 1020 |
| | | | | | | |

| **Imprägnieren in das Farbmittel enthaltener Lösung** | | | | | | |
|---|---|---|---|---|---|---|
| Temperatur des Autoklaven [°C] | 60 | 55 | 45 | 60 | 55 | 40 |
| Druck im Autoklaven [kgf/mm²] | 9 | 5 | 0 | 9 | 5 | 0 |
| Dauer des Imprägnierens [h] | 1 | 2 | 72 | 1 | 2 | 72 |
| Dauer der Zentrifuge [min] | 15 | | | | | |
| | | | | | | |

| **Imprägnieren in wachs- oder fettartigen Stoff enthaltender Lösung** | | | | | | |
|---|---|---|---|---|---|---|
| Temperatur des Autoklaven [°C] | 40 | 100 | 120 | 40 | 100 | 110 |
| Druck im Autoklaven [kgf/mm²] | 0 | 5 | 9 | 0 | 8 | 9 |
| Dauer des Imprägnierens [h] | 72 | 2 | 1 | 72 | 2 | 1 |
| Dauer der Zentrifuge [min] | 15 | | | | | |

Eine wasserlösliche, radierbare Farbmine bzw. ein Stift mit einer solchen Farbmine mit einer Zusammensetzung gemäß Ausführungsbeispiel A weist mit 20,5 Gew.-% den höchsten Anteil an dem Füllstoff Ton der Ausführungsbeispiele für eine wasserlösliche Farbmine auf, der neben Bornitrid als Füllstoff in der Farbmine enthalten ist. Durch einen hohen Anteil an Ton oder Kaolin wird die Farbmine grundsätzlich härter, was zunächst einen schwächeren bzw. weniger farbintensiven Abstrich zur Folge hat. Ausführungsbeispiel A hat jedoch gezeigt, dass sich dies mit einem höheren Gesamtanteil an Farbmitteln, nämlich 1,6 Gew.-% an wasserlöslichen Farbstoffen, ausgleichen lässt, sodass der mit einer solchen Farbmine erzeugte Abstrich dennoch eine hohe Farbintensität sowie eine exzellente Aquarellierbarkeit bei Behandlung mit Wasser aufweist. Ferner wurde die Farbmine bei einer Temperatur von lediglich 600 °C gesintert, wodurch die Porosität des Minengrundkörpers erhöht ist und die Farbmine insgesamt weicher ist, wodurch ebenfalls die Farbintensität erhöht wird.

Eine wasserlösliche, radierbare Farbmine bzw. ein Stift mit einer solchen Farbmine mit einer Zusammensetzung gemäß Ausführungsbeispiel B unterscheidet sich von der Farbmine gemäß Ausführungsbeispiel A im Wesentlichen durch einen geringeren Anteil an Ton (15 Gew.-%) und einen höheren Anteil an insgesamt vorhandenen Gleitmitteln (15,6 Gew.-%), insbesondere mehr eingebrachtes hydrophiles Wachs. Dadurch wird insbesondere die Aquarellierbarkeit der Farbmine verbessert.

Eine wasserlösliche, radierbare Farbmine bzw. ein Stift mit einer solchen Farbmine mit einer Zusammensetzung gemäß Ausführungsbeispiel C weist einen im Vergleich zu den beiden vorherigen Ausführungsbeispielen A und B deutlich höheren Gehalt an Bornitrid als Füllstoff, nämlich 82,3 Gew.-% auf. Der Anteil an Ton als Füllstoff ist hingegen deutlich verringert (10,2 Gew.-%). Dadurch wird die Farbmine weicher und der Abstrich weist sehr leichte Radierbarkeit auf.

Eine permanente, radierbare Farbmine bzw. ein Stift mit einer solchen Farbmine mit einer Zusammensetzung gemäß Ausführungsbeispiel D zeichnet sich vorwiegend durch einen hohen Anteil an Bindemittel, vorliegend 11,0 Gew.-% aus. Dadurch zeigt der Minengrundkörper eine große Porosität, die Farbmine ist weich und erzeugt einen Abstrich, der eine hohe Farbintensität aufweist. Der hohe Anteil an Gleitmitteln, insgesamt 13,0 Gew.-%, sorgt zudem für ein angenehmes Applikationsverhalten auf der Schreib-, Zeichen- oder Malunterlage.

Eine permanente, radierbare Farbmine bzw. ein Stift mit einer solchen Farbmine mit einer Zusammensetzung gemäß Ausführungsbeispiel E weist einen im Vergleich zu der vorherigen Farbmine höheren Anteil an Bornitrid auf, wodurch eine Farbmine erhalten wird, deren Abstriche eine verbesserte Radierbarkeit zeigen. Ferner wird ein dritter Füllstoff, nämlich Kaolin zugegeben.

Auch bei der permanenten, radierbaren Farbmine bzw. einem Stift mit einer solchen Farbmine gemäß Ausführungsbeispiel F werden drei Füllstoffe eingesetzt, nämlich Ton, Kaolin sowie Bornitrid. Insgesamt weist die Farbmine gemäß Ausführungsbeispiel F den höchsten Gesamtanteil an Füllstoffen sowie den höchsten an Anteil an Bornitrid auf, wodurch die Farbmine wiederum eine sehr gute Radierbarkeit zeigt. Diese wird auch durch den niedrigen Anteil an Bindemittel von lediglich 5,0 Gew.-% sowie die hohen Sintertemperaturen von etwa 1050 °C die die Härte der Farbmine grundsätzlich erhöhen, nicht wesentlich beeinträchtigt.

### Produktbezeichnungen/Hersteller:

1) Talkum (CAS-Nr. 14807-96-6; z.B. Talmag PR-2, Magnesita); Kaolin (CAS-Nr. 1332-58-7; z.B. SAZ003, Imerys) oder Calciumcarbonat (CAS-Nr. 471-34-1; z.B. NAT EDK 400, EDK Mineração)
2) Ton (CAS-Nr. 1332-58-7; z.B. Karlich, Kärlicher Ton und Scham. Mann. & Co.)
3) Bornitrid (CAS-Nr. 10043-11-5; z.B. Tres BN PUPH500, Saint Gobain)
4) Bindemittel (CAS-Nr. 9004-32-4; z.B. Denvercell, Denver Especialidades Quimicas)
5) CAS-Nr. 2390-60-5; z.B. Spectra Victoria Pure Blue BO, Spectra Colors Corporation
6) CAS-Nr. 6358-36-7; z.B. Spectrazine Yellow WFA, Spectra Colors Corporation
7) CAS-Nr. 989-38-8; z.B. Spectra Rhodamine 6GDN Conc, Spectra Colors Corporation
8) CAS-Nr. 569-64-2; z.B. Malakite Green, Polycrom Quimica do Brasil
9) CAS-Nr. 989-38-8; z.B. Rhodamine 6GDN 500%, ChemColour's GmbH
10) CAS-Nr. 64-17-5; z.B. Cerba Destilaria de Älcool LTDA
11) Solvent Red 23, CI 26100; Solvent Blue 35, CI 61554
12) CAS-Nr. 68439-49-6; z.B. Cosmowax CS80-PA-RB, Croda oder Genapol T800P, Clariant)
13) CAS-Nr. 61789-97-7; z.B. hydrierter Talg, A. Azevedo Ind. e Com. de Óleos Ltda
14) Montanwachs/CAS-Nr. 73138-45-1; z.B. Waradur ESL, Voelpker

## Patentansprüche

1. Radierbare, gesinterte Farbmine für Schreib-, Zeichen- und Malgeräte oder Farbkreide mit einem gesinterten Minen- oder Kreidengrundkörper, der aus einer Minen- oder Kreidengrundmasse enthaltend mindestens ein Bindemittel mit einem Anteil von 4 bis 17 Gew.-% und mindestens einen Füllstoff mit einem Anteil von 25 bis 99 Gew.-% gebildet ist, wobei der gesinterte Minen- oder Kreidengrundkörper mit mindestens einem Farbmittel und mindestens einem Gleitmittel imprägniert ist, wobei Farbmittel mit einem Anteil von 0,1 bis 10 Gew.-% in der Farbmine oder Farbkreide enthalten ist, wobei als Füllstoffe Bornitrid und/oder ein mineralischer Füllstoff, insbesondere Kaolin und/oder Talkum und/oder Calciumcarbonat, und/oder Ton in der Minen- oder Kreidengrundmasse enthalten ist.

2. Farbmine oder Farbkreide nach Anspruch 1, **dadurch gekennzeichnet, dass** das Bornitrid mit einem Anteil von maximal 90 Gew.-%, insbesondere mit einem Anteil von maximal 82 Gew.-%, besonders bevorzugt mit einem Anteil von maximal 75 Gew.-% in der Minen- oder Kreidengrundmasse enthalten ist.

3. Farbmine oder Farbkreide nach einem der Ansprüche 1 oder 2, **dadurch gekennzeichnet, dass** der mineralische Füllstoff mit einem Anteil von maximal 90 Gew.-%, insbesondere mit einem Anteil von maximal 82 Gew.-%, besonders bevorzugt mit einem Anteil von maximal 75 Gew.-% in der Minen- oder Kreidengrundmasse enthalten ist.

4. Farbmine oder Farbkreide nach einem der Ansprüche 2 bis 4, **dadurch gekennzeichnet, dass** der Ton mit einem Anteil von 1 bis 60 Gew.-%, insbesondere mit einem Anteil von 1 bis 50 Gew.-%, besonders bevorzugt mit einem Anteil von 1 bis 45 Gew.-% in der Minen- oder Kreidengrundmasse enthalten ist.

5. Farbmine oder Farbkreide nach einem der vorhergehenden Ansprüche, **dadurch gekennzeichnet, dass** die Füllstoffe mit einem Anteil von mindestens 50 Gew.-%, insbesondere mit einem Anteil von mindestens 65 Gew.-%, besonders bevorzugt mit einem Anteil von mindestens 80 Gew.-% in der Minen- oder Kreidengrundmasse enthalten sind.

6. Farbmine oder Farbkreide nach einem der vorhergehenden Ansprüche, **dadurch gekennzeichnet, dass** das Farbmittel mit einem Anteil von 0,5 bis 7 Gew.-%, besonders bevorzugt mit einem Anteil von 0,8 bis 5 Gew.-% in der Farbmine oder Farbkreide enthalten ist.

7. Farbmine oder Farbkreide nach einem der vorhergehenden Ansprüche, **dadurch gekennzeichnet, dass** als Farbmittel zumindest ein wasserlöslicher oder ein alkohollöslicher Farbstoff oder zumindest ein öllöslicher Farbstoff oder zumindest ein fluoreszierender Farbstoff enthalten sind.

8. Farbmine oder Farbkreide nach einem der vorhergehenden Ansprüche, **dadurch gekennzeichnet, dass** das Gleitmittel mit einem Anteil von 1 bis 20 Gew.-%, insbesondere mit einem Anteil von 3 bis 18 Gew.-%, besonders bevorzugt mit einem Anteil von 5 bis 16 Gew.-% in der Farbmine oder Farbkreide enthalten ist.

9. Farbmine oder Farbkreide nach einem der vorhergehenden Ansprüche, **dadurch gekennzeichnet, dass** als Gleitmittel zumindest ein hydrophiles Wachs und/oder zumindest ein hydrophober fett- oder wachsartiger Stoff, insbesondere Triglyceride einer oder mehrerer Fettsäuren, ein Paraffinwachs und/oder ein Polyolefinwachs und/oder ein Öl enthalten ist.

10. Stift mit einer Farbmine nach einem der Ansprüche 1 bis 9, insbesondere ein Farbstift mit einer Ummantelung aus Holz oder aus einem Holzersatzwerkstoff oder ein mechanischer Stift.

11. Verfahren zur Herstellung einer Farbmine oder Farbkreide nach einem der Ansprüche 1 bis 9, **gekennzeichnet durch** folgende Verfahrensschritte:
a) Herstellen eines gesinterten Kreiden- oder Minengrundkörpers aus einer Kreiden- oder Minengrundmasse enthaltend zumindest ein Bindemittel und zumindest einen Füllstoff,
b) Imprägnieren des gesinterten Kreiden- oder Minengrundkörpers in einer zumindest ein Farbmittel enthaltenden Lösung,
c) Imprägnieren des gesinterten Kreiden- oder Minengrundkörpers in einer zumindest ein Gleitmittel enthaltenden Lösung,
wobei das Farbmittel in der Lösung mit einem Anteil von 1 bis 30 Gew.-% enthalten ist.

12. Verfahren nach Anspruch 11, **dadurch gekennzeichnet, dass** das Herstellen des gesinterten Kreiden- oder Minengrundkörpers folgende Schritte umfasst:
a1) Vermischen und Homogenisieren des zumindest einen Bindemittels und des zumindest einen Füllstoffes zu der Minen- oder Kreidengrundmasse, insbesondere in einem Schnellmischer,
a2) Kneten der Minen- oder Kreidengrundmasse, insbesondere in einem Kneter und/oder einer Walzenmühle,
a3) Extrusion der Minen- oder Kreidengrundmasse zu Kreiden und/oder Minensträngen,
a4) Trocknen der extrudierten Kreiden und/oder Minenstränge,
a5) Sintern der getrockneten Kreiden und/oder Minenstränge.

13. Verfahren nach einem der Ansprüche 11 oder 12, dass das Farbmittel in der Lösung mit einem Anteil von 3 bis 26 Gew.-%, besonders bevorzugt mit einem Anteil von 5 bis 22 Gew.-% enthalten ist.

14. Verfahren nach einem der Ansprüche 11 bis 13, **dadurch gekennzeichnet, dass** nach dem Imprägnieren in der Kreide und/oder den Minensträngen vorhandenes überschüssiges Lösungsmittel, insbesondere Wasser oder Alkohol, jeweils mittels Zentrifugieren entfernt wird.

## Claims

1. Erasable, sintered coloured lead for writing-, drawing- and painting devices or coloured chalk having a sintered lead- or chalk base body, which is formed from a lead- or chalk base mass including at least one binding agent having a proportion of from 4 to 17% by weight and at least one filler having a proportion of from 25 to 99% by weight, wherein the sintered lead- or chalk base body is impregnated with at least one dye and at least one lubricant, wherein dye having a proportion of from 0.1 to 10% by weight is included in the coloured lead or coloured chalk, wherein boron nitride and/or a mineral filler, in particular kaolin and/or talcum and/or calcium carbonate, and/or clay is included in the lead- or chalk base body as fillers.

2. Coloured lead or coloured chalk according to claim 1, **characterised in that** the boron nitride having a proportion of maximum 90% by weight, in particular having a proportion of maximum 82% by weight, particularly preferably having a proportion of maximum 75% by weight is included in the lead- or chalk base mass.

3. Coloured lead or coloured chalk according to one of claims 1 or 2, **characterised in that** the mineral filler having a proportion of maximum 90% by weight, in particular having a proportion of maximum 82% by weight, particularly preferably having a proportion of maximum 75% by weight is included in the lead- or chalk base mass.

4. Coloured lead or coloured chalk according to one of claims 2 to 3, **characterised in that** the clay having a proportion of from 1 to 60% by weight, in particular having a proportion of from 1 to 50% by weight, particularly preferably having a proportion of 1 to 45% by weight is included in the lead- or chalk base mass.

5. Coloured lead or coloured chalk according to one of the preceding claims, **characterised in that** the fillers having a proportion of at least 50% by weight, in particular having a proportion of at least 65% by weight, particularly preferably having a proportion of at least 80% by weight are included in the lead- or chalk base mass.

6. Coloured lead or coloured chalk according to one of the preceding claims, **characterised in that** the dye having a proportion of from 0.5 to 7% by weight, particularly preferably having a proportion of from 0.8 to 5% by weight is included in the coloured lead or coloured chalk.

7. Coloured lead or coloured chalk according to one of the preceding claims, **characterised in that** at least one water-soluble or one alcohol-soluble dye or at least one oil-soluble dye or at least one fluorescent dye are included as a dye.

8. Coloured lead or coloured chalk according to one of the preceding claims, **characterised in that** the lubricant having a proportion of from 1 to 20% by weight, in particular having a proportion of from 3 to 18% by weight, particularly preferably having a proportion of from 5 to 16% by weight, is included in the coloured lead or coloured chalk.

9. Coloured lead or coloured chalk according to one of the preceding claims, **characterised in that**, as a lubricant, at least one hydrophilic wax and/or at least one hydrophobic fatty or waxy material, in particular triglycerides of one or several fatty acids, a paraffin wax and/or a polyolefin wax and/or an oil is included.

10. Pencil having a coloured lead according to one of claims 1 to 9, in particular a coloured lead having a coating made of wood or made of a wood substitute material, or a mechanical pencil.

11. Method for manufacturing a coloured lead or coloured chalk according to one of claims 1 to 9, **characterised by** the following method steps:
a) manufacturing a sintered chalk- or lead base body from a chalk- or lead base mass including at least one binding agent and at least one filler,
b) impregnating the sintered chalk- or lead base body in a solution including at least one dye,
c) impregnating the sintered chalk- or lead base body in a solution including at least one lubricant,
wherein the dye is included in the solution having a proportion of from 1 to 30% by weight.

12. Method according to claim 11, **characterised in that** the manufacturing of the sintered chalk- or lead base body comprises the following steps:
a1) mixing and homogenising the at least one binding agent and the at least one filler with the lead- or chalk base mass, in particular in a high-speed mixer,
a2) kneading the lead- or chalk base mass, in particular in a kneader and/or a roller mill,
a3) extruding the lead- or chalk base mass into chalks and/or lead strands,
a4) drying the extruded chalks and/or lead strands,
a5) sintering the dried chalks and/or lead strands.

13. Method according to one of claims 11 or 12, that the dye is included in the solution having a proportion of from 3 to 26% by weight, particularly preferably having a proportion of from 5 to 22% by weight.

14. Method according to one of claims 11 to 13, **characterised in that**, after the impregnation in the chalk and/or the lead strands, existing excess solvent, in particular water or alcohol, is removed by means of centrifuging in each case.

## Revendications

1. Mine de couleur frittée et pouvant être gommée pour des instruments d'écriture, de dessin et de peinture ou craie de couleur ayant un corps de base de mine ou de craie frittée, qui est formé d'une masse de base de mine ou de craie contenant au moins un liant en une proportion de 4 à 17% en poids et au moins une charge en une proportion de 25 à 99% en poids, le corps de base de mine ou de craie frittée étant imprégné d'au moins un colorant et d'au moins un lubrifiant, le colorant étant contenu en une proportion de 0,1 à 10% en poids dans la mine colorée ou la craie colorée, dans laquelle il est contenu comme charge du nitrure de bore et/ou une charge minérale, notamment du kaolin et/ou du talc et/ou du carbonate de calcium et/ou de l'argile dans la masse de base de mine ou de craie.

2. Mine de couleur ou craie de couleur suivant la revendication 1, **caractérisée en ce que** le nitrure de bore est contenu en une proportion de 90% en poids au maximum, notamment en une proportion de 82% en poids au maximum, d'une manière particulièrement préférée en une proportion de 75% en poids au maximum dans la masse de base de mine ou de craie.

3. Mine de couleur ou craie de couleur suivant l'une des revendications 1 ou 2, **caractérisée en ce que** la charge minérale est contenue en une proportion de 90% en poids au maximum, notamment en une proportion de 82% en poids au maximum, d'une manière particulièrement préférée en une proportion de 75% en poids au maximum dans la masse de base de mine ou de craie.

4. Mine de couleur ou craie de couleur suivant l'une des revendications 2 à 3, **caractérisée en ce que** l'argile est contenue en une proportion de 1 à 60% en poids, notamment en une proportion de 1 à 50% en poids, d'une manière particulièrement préférée en une proportion de 1 à 45% en poids dans la masse de base de mine ou de craie.

5. Mine de couleur ou craie de couleur suivant l'une des revendications précédentes, **caractérisée en ce que** les charges sont contenues en une proportion d'au moins 50% en poids, notamment en une proportion d'au moins 65% en poids, d'une manière particulièrement préférée en une proportion d'au moins 80% en poids dans la masse de base de mine ou de craie.

6. Mine de couleur ou craie de couleur suivant l'une des revendications précédentes, **caractérisée en ce que** le colorant est contenu en une proportion de 0,5 à 7% en poids, d'une manière particulièrement préférée en une proportion de 0,8 à 5% en poids dans la mine de couleur ou la craie de couleur.

7. Mine de couleur ou craie de couleur suivant l'une des revendications précédentes, **caractérisée en ce que** sont contenus comme colorants au moins un colorant soluble dans l'eau ou un colorant soluble dans l'alcool ou au moins un colorant soluble dans l'huile ou au moins un colorant fluorescent.

8. Mine de couleur ou craie de couleur suivant l'une des revendications précédentes, **caractérisée en ce que** le lubrifiant est contenu en une proportion de 1 à 20% en poids, notamment en une proportion de 3 à 18% en poids, d'une manière particulièrement préférée en une proportion de 5 à 16% en poids dans la mine de couleur ou la craie de couleur.

9. Mine de couleur ou craie de couleur suivant l'une des revendications précédents, **caractérisée en ce qu'**il est contenu, comme agent lubrifiant, au moins une cire hydrophile et/ou au moins une substance hydrophobe de type graisse ou cire, notamment des triglycérides d'un ou de plusieurs acides gras, une cire de paraffine et/ou une cire de polyoléfine et/ou une huile.

10. Crayon ayant une mine de couleur suivant l'une des revendications 1 à 9, notamment crayon de couleur ayant une gaine en bois ou en un matériau de remplacement du bois ou crayon mécanique.

11. Procédé de production d'une mine de couleur ou d'une craie de couleur suivant l'une des revendications 1 à 9, **caractérisé par** les stades de procédé suivants :
a) production d'un corps de base de craie ou de mine frittée en une masse de base de craie ou de mine, contenant au moins un liant et au moins une charge,
b) imprégnation du corps de base de craie ou de mine frittée par une solution contenant au moins un colorant,
c) imprégnation du corps de base de craie ou de mine frittée par une solution contenant au moins un lubrifiant, le colorant étant contenu dans la solution en une proportion de 1 à 30% en poids.

12. Procédé suivant la revendication 11, **caractérisé en ce que** la production du corps de base de craie ou de mine frittée comprend les stades suivants :
a1) mélange et homogénéisation du au moins un liant et de la au moins une charge à la masse de base de mine ou de craie, notamment dans un mélangeur rapide,
a2) malaxage de la masse de base de mine ou de craie, notamment dans un malaxeur et/ou dans un broyeur à rouleaux,
a3) extrusion de la masse de base de mine ou de craie en des craies et/ou en des cordons de mine,
a4) séchage des craies et/ou des cordons de mine extrudés,
a5) frittage des craies et/ou des cordons de mine séchés.

13. Procédé suivant l'une des revendications 11 ou 12, **caractérisé en ce que** le colorant est contenu dans la solution en une proportion de 3 à 26% en poids, d'une manière particulièrement préférée en une proportion de 5 à 22% en poids.

14. Procédé suivant l'une des revendications 11 à 13, **caractérisé en ce qu'**après l'imprégnation, on élimine, respectivement, au moyen d'une centrifugation, du solvant, notamment de l'eau ou de l'alcool, en excès présent dans la craie et/ou dans les cordons de mine.
